# EUROPÄISCHE PATENTSCHRIFT

(11) **EP 1 210 636 B1**
(45) Veröffentlichungstag und Bekanntmachung des Hinweises auf die Patenterteilung: **15.10.2003**
(21) Anmeldenummer: 00952949.6
(22) Anmeldetag: 21.07.2000
(51) Int. Cl.: G02B 26/02

(54) **OPTISCHE KOPPLUNGSEINRICHTUNG**
OPTICAL COUPLING DEVICE
DISPOSITIF DE COUPLAGE OPTIQUE

(30) Priorität: 21.07.1999 DE 19934178
(43) Veröffentlichungstag der Anmeldung: 05.06.2002
(73) Patentinhaber: Corning Incorporated, Corning, New York 14831 (US)
(72) Erfinder: SCHWEIKER, Wolfgang, D-83620 Feldkirchen-Westerham (DE); HEISE, Gerhard, D-81739 München (DE); ZIMMER, Frank, D-86937 Scheuring (DE)
(74) Vertreter: Viering, Jentschura & Partner
(86) Internationale Anmeldenummer: DE0002397
(87) Internationale Veröffentlichungsnummer: WO01007944

(56) Entgegenhaltungen:
- WO-A-98/13718
- DE-A- 3 716 836
- DE-A- 4 109 195
- DE-A- 19 635 023
- DE-A- 19 713 630
- US-A- 4 212 513
- PATENT ABSTRACTS OF JAPAN vol. 008, no. 117 (P-277), 31. Mai 1984 (1984-05-31) & JP 59 024804 A (NIPPON TOKUSHU TOGYO KK;OTHERS: 01), 8. Februar 1984 (1984-02-08)

## Beschreibung

Die Erfindung betrifft eine optische Kopplungseinrichtung nach dem Oberbegriff des Anspruchs 1. Eine solche Kopplungseinrichtung ist beispielsweise aus der WO 98/13718 oder aus der JP 59024804 bekannt.

Derartige Kopplungseinrichtungen werden in optischen Filtern nach dem Phased-Array-Prinzip mit einer Einkoppelfläche eingesetzt, in die an einer bestimmten geometrischen Position Licht eintritt, wobei die geometrische Position die Ausgangswellenlänge des optischen Filters beeinflußt. Derartige optische Filter nach dem Phased-Array-Prinzip werden insbesondere als Multiplexer oder Demultiplexer im optischen Wellenlängenmultiplex-Betrieb (WDM) eingesetzt, da sie eine geringe Einfügedämpfung und eine hohe Nebensprechunterdrückung aufweisen. Der optische Filter weist als wesentlichen Bestandteil mehrere gekrümmt verlaufende optische Lichtwellenleiter unterschiedlicher Länge auf, die einen Phasenschieberbereich bilden. In der deutschen Patentanmeldung DE 44 22 651.9 wird beschrieben, daß die Mittelwellenlänge eines Phased-Array-Filters durch die Position eines Einkoppel-Lichtwellenleiters, der das Licht in den Schicht-Lichtwellenleiter leitet, festgelegt werden kann. Auf diese Weise kann durch die geometrische Positionierung des Einkoppel-Lichtwellenleiters oder der Einkoppelfaser die Mittelwellenlänge des optischen Filters genau justiert werden. Da es daher erwünscht ist, daß die Lichtwellenleiter relativ zueinander verschoben werden, können die Lichtwellenleiter nicht miteinander verklebt werden.

Bei der eingangs genannten, optischen Kopplungseinrichtung ist ein erster Halteblock am Chip befestigt und die Lichtwellenleiterfaser an dem längenveränderlichen Element gehalten. Dabei kann es zu Schwingungen oder Verbiegungen des längenveränderlichen Elements und damit zu einer temporären oder dauerhaften Dejustierung der Faser kommen.

Der Erfindung liegt daher die Aufgabe zugrunde, eine verbesserte Führung des längenveränderlichen Elements parallel zu seiner Hauptdehnungsrichtung zu gewährleisten und dabei einen zusätzlichen Arbeitsaufwand zu vermeiden. Diese Aufgabe wird durch eine optische Kopplungseinrichtung mit den in Patentanspruch 1 angegebenen Merkmalen gelöst.

Da die Führungseinrichtung einen zweiten Halteblock als Widerlager aufweist, an dem das längenveränderliche Element parallel zu seiner Hauptdehnungsrichtung mittels einer Ferrule geführt ist, wird eine verbesserte Führung des längenveränderlichen Elements parallel zur Ankopplungsfläche in einfacher Weise gewährleistet und zusätzlicher Aufwand vermeiden.

Durch diese Anordnung wird die Längenveränderung des längenveränderlichen Elementes ermöglicht, jedoch die Bewegung des Elementes im Widerlager nur in der Dimension senkrecht zur Ausdehnungsrichtung des längenveränderlichen Elements beschränkt. Die Führung der beweglichen Achse ist dabei sehr genau, so daß eventuelle Bewegungen in Richtung der fixierten Achse kleiner als ein Mikrometer sind. Dadurch wird erreicht, daß die Bewegung des ersten Lichtwellenleiters (Faser) relativ zu dem auf dem optischen Bauelement (Chip) vorhandenen zweiten Lichtwellenleiter (Streifenleiter) sehr exakt parallel zur Oberfläche des Bauelements erfolgt, und daß eine Dejustierung in anderen Raumrichtungen praktisch nicht auftritt.

Es ist vorteilhaft, wenn die Ferrule im zweiten Halteblock bzw. im längenveränderlichen Element in einer passenden, handelsüblichen Kupplungshülse geführt wird.

Insbesondere durch die Verwendung der Ferrule, beispielsweise einer handelsüblichen Lichtwellenleiter-Steckerferrule, die in Längsrichtung des längenveränderlichen Elements angebracht wird, kann eine besonders genaue Führung erzielt werden.

Bei Kopplungseinrichtungen der obengenannten Art werden bisher die Fasern in V-Nuten geklebt und die dabei entstehenden Hohlräume mit Klebstoff gefüllt. Da der Klebstoff ein unterschiedliches Verhalten bezüglich Temperatur, Ausdehnungskoeffizient, Wasseraufnahme und dgl. als die Fasern und Halteblöcke beziehungsweise das längenveränderliche Element aufweist, kann es unter wechselnden Umweltbedingungen zu Spannungen im Klebstoff und damit zu einer Dejustierung der Faser kommen. Dies läßt sich vermeiden, indem man die Faser in einer in einer Bohrung des längenveränderlichen Elements angeordneten Ferrule verankert, insbesondere verklebt.

Ausführungsbeispiele der Erfindung werden im Folgenden anhand der Zeichnungen erläutert. Es zeigen:
- Fig.1A und 1B: eine Seitenansicht beziehungsweise eine Stirnansicht einer Kopplungseinrichtung gemäß der Erfindung;
- Fig. 2: den schematischen Aufbau der Verbindung zwischen dem längenveränderlichen Element und einer Lichtwellenleiter-Faser;
- Fig. 3: eine Seitenansicht der Einrichtung nach Fig. 1; und
- Fig. 4: ein Lichtwellenleiter-Faserfeld zur Ankopplung an optische Chips mit vielen parallelen Lichtwellenleitern.

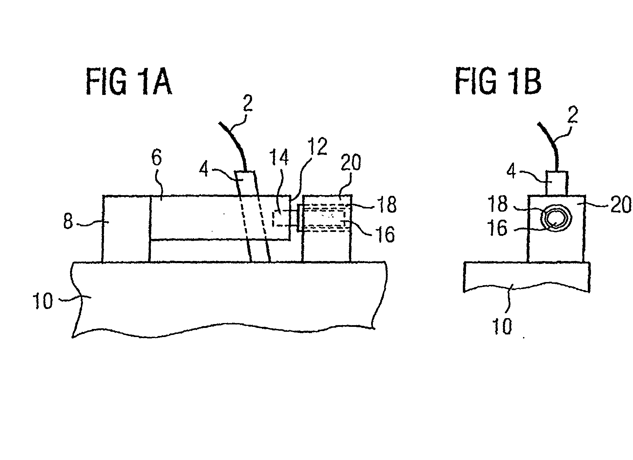

In Fig. 1A ist als erster Lichtwellenleiter eine Faser 2 dargestellt, die über eine Ferrule 4 in einem längenveränderlichen Element 6 befestigt ist. Das beispielsweise aus Aluminium gefertigte Element 6 ist an einem Halteblock 8 (Glas oder Glaskeramik) befestigt, insbesondere verklebt, der seinerseits an einem zweitem Lichtwellenleiter 10, in diesem Beispiel einem Lichtwellenleiter-Chip befestigt beziehungsweise verklebt ist.

An der freien Stirnseite 12 des längenveränderlichen Elements 6 ist in einer entsprechenden Bohrung 14 eine Ferrule 16 angeordnet, die über die freie Stirnseite 12 des längenveränderlichen Elements 6 hinausragt. Das freie Ende der Ferrule 16 ist über eine Führungshülse 18 in einem zweiten Halteblock 20 gelagert, so daß sich das längenveränderliche Element 6 in Richtung seiner Längsachse ausdehnen, in den dazu orthogonalen Raumrichtungen hingegen nicht ausweichen kann. Da es sich bei der Ferrule 16 und der Hülse 18 um bewährte Standardbauteile handelt, wird eine sichere Führung des längenveränderlichen Elements 6 in der Längsachse derselben gewährleistet. Alternativ kann die Ferrule 16 fest im Halteblock 20 fixiert und gleitbar im längenveränderlichen Element 6 gelagert sein.

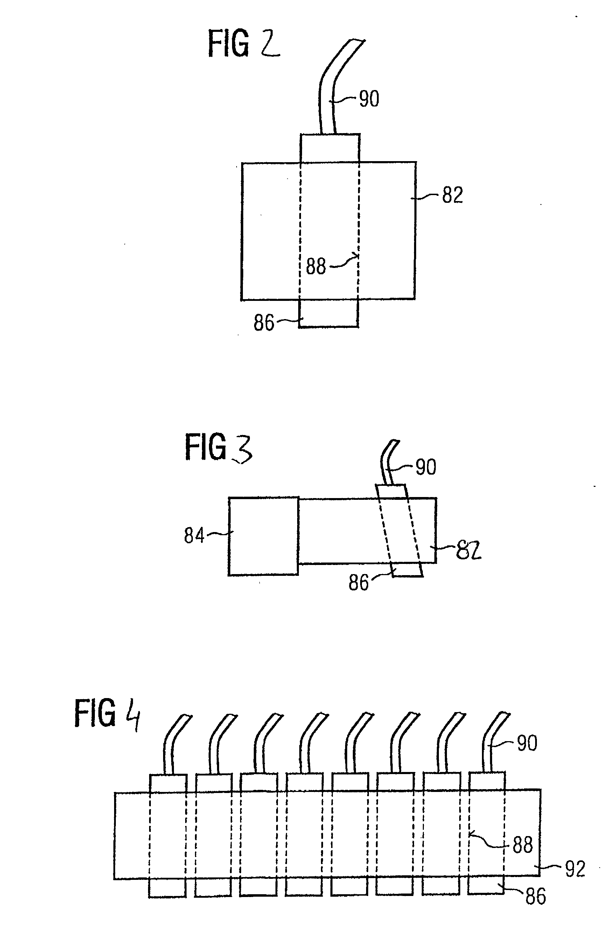

Ein rechteckiges, längliches, längenveränderliches Element 82 ist in Fig. 2 in Stirnansicht und in Fig. 3 in Seitenansicht dargestellt. Das längenveränderliche Element 82 ist an einem Halteblock 84 befestigt, der an der Oberfläche eines optischen Chips (nicht gezeigt) angeklebt wird. Das Element 82 ist mit dem Halteblock 84 ebenfalls an einer Stirnseite verbunden.

In das Element 82 ist eine handelsübliche Ferrule 86 in einer entsprechenden Bohrung 88 befestigt. In der Ferrule 88 ist eine optische Faser 90 befestigt. Die Ferrule 88 kann entweder senkrecht in das Element 82 oder unter einem Winkel in das Element eingebaut sein, um Reflexionen an der Stirnfläche der Fasern zu verringern. Die Ferrule kann auch eine Mehrfaser-Ferrule sein.

Fig. 4 zeigt eine Gruppe von Fasern in einem Block 92, wobei die Fasern 90 jeweils in einer Ferrule 86 angeordnet, die wiederum in entsprechenden Bohrungen 88 in dem Block 92 eingesetzt beziehungsweise eingeklebt sind.

## Patentansprüche

1. Optische Kopplungseinrichtung zum Überkoppeln von Licht aus einem ersten Lichtwellenleiter (2) in einen zweiten Lichtwellenleiter (10), wobei die relative Lage der beiden Lichtwellenleiter-Endflächen zueinander mit Hilfe eines den ersten Lichtwellenleiter (2) haltenden, längenveränderlichen Elements (6, 82) beeinflußbar ist und wobei das längenveränderliche Element (6, 82) über einen ersten Halteblock (8) an einem den zweiten Lichtwellenleiter (10) enthaltenden optischen Bauelement befestigt ist und es eine Führungseinrichtung (18, 20) aufweist, welche eine Längung des längenveränderlichen Elements (6, 82) nur in einer im wesentlichen parallel zur Längenänderungsrichtung des längenveränderlichen Elements (6, 82) und parallel zur Oberfläche des optischen Bauelements orientierten Raumrichtung erlaubt, wobei die Führungseinrichtung einen zweiten Halteblock (20) als Widerlager aufweist, an dem das längenveränderliche Element (6, 82) parallel zu seiner Längenänderungsrichtung geführt ist, **dadurch gekennzeichnet, daß** die Führungseinrichtung eine mit dem längenveränderlichen Element (6) oder mit dem zweiten Haltblock (20) verbundene Ferrule (16) aufweist, welche in einer Bohrung in dem zweiten Halteblock (20) bzw. in dem längenveränderlichen Element (6, 82) in Richtung der Längenänderungsrichtung des längenveränderlichen Elements verschiebar gelagert ist.

2. Einrichtung nach Anspruch 1, **dadurch gekennzeichnet, daß** die Ferrule (16) über eine Hülse (18) in dem zweiten Halteblock (20) bzw. in dem längenveränderlichen Element (6, 82) geführt ist.

## Claims

1. Optical coupling device for cross-coupling light from a first optical waveguide (2) into a second optical waveguide (10), it being possible for the relative position of the two optical waveguide end faces in relation to each other to be influenced with the aid of a variable-length element (6, 82) which holds the first optical waveguide (2) and the variable-length element (6, 82) being fixed via a first holding block (8) to an optical component containing the second optical waveguide (10) and having a guide device (18, 20) which permits the variable-length element (6, 82) to lengthen only in a spatial direction oriented substantially parallel to the direction of the variable-length element (6, 82) in which the variation in length takes place and parallel to the surface of the optical component, the guide device having a second holding block (20) as an abutment, on which the variable-length element (6, 82) is guided parallel to the direction in which the variation in length takes place, **characterized in that** the guide device has a ferrule (16) which is connected to the variable-length element (6, 82) or to the second holding block (20) and is mounted in a hole in the second holding block (20) or in the variable-length element (6, 82), respectively, such that it can be displaced in the direction of the variable-length element (6, 82) in which the variation in length takes place.

2. Device according to claim 1, **characterized in that** the ferrule (16) is guided in the second holding block (20) or in the variable-length element (6, 82), respectively, via a sleeve (18).

## Revendications

1. Dispositif de couplage optique pour le transfert d'une lumière depuis un premier guide d'ondes lumineuses (2) dans un second guide d'ondes lumineuses (10), et dans lequel la position relative des deux surfaces d'extrémité des guides d'ondes lumineuses peut être influencée au moyen d'un élément (6, 82) qui est de longueur variable et retient le premier guide d'ondes lumineuses (2), et dans lequel l'élément (6, 82) de longueur variable est fixé au moyen d'un premier bloc de retenue (8) sur un composant optique qui contient le second guide d'ondes lumineuses (10) et comporte un dispositif de guidage (18, 20), qui permet un allongement de l'élément de longueur variable (6, 82) uniquement dans une direction spatiale orientée essentiellement parallèlement à la direction de variation de longueur de l'élément de longueur variable (6, 82) et parallèlement à la surface du composant optique, et dans lequel le dispositif de guidage comporte un second bloc de retenue (20) formant butée et contre lequel l'élément de longueur variable (6, 82) est guidé parallèlement à sa direction de variation de longueur, **caractérisé en ce que** le dispositif de guidage comporte une virole ou un manchon (16) reliée à l'élément de longueur variable (6) ou au second bloc de retenue (20) et qui est monté de manière à être déplaçable dans un perçage situé dans le second bloc de retenue (20) ou dans l'élément de longueur variable (6, 82) dans la direction de modification de la longueur de l'élément de longueur variable.

2. Dispositif selon la revendication 1, **caractérisé en ce que** la virole (16) est guidée au moyen d'une douille (18) dans le second bloc de retenue (20) ou dans l'élément de longueur variable (6, 82).
